# EUROPEAN PATENT APPLICATION

(11) **EP 3 240 343 A1**
(43) Date of publication of application: **01.11.2017**
(21) Application number: 15871721.5
(22) Date of filing: 31.08.2015
(51) Int. Cl.: H04W 72/02

(54) **CHANNEL ACQUISITION SIGNAL CONFIGURING AND CHANNEL ACQUISITION SIGNAL GENERATING METHOD AND DEVICE**

(30) Priority: 25.12.2014 CN 201410830315
(71) Applicant: ZTE Corporation, Shenzhen, Guangdong 518057 (CN)
(72) Inventor: LU, Zhaohua, Shenzhen Guangdong 518057 (CN); CHEN, Yijian, Shenzhen Guangdong 518057 (CN); YU, Guanghui, Shenzhen Guangdong 518057 (CN); LI, YU Ngok, Shenzhen Guangdong 518057 (CN)
(74) Representative: Brunazzi, Stefano
(86) International application number: PCT/CN2015/088519
(87) International publication number: WO 2016/101647

(57) **Abstract**

Methods and devices for configuring or generating a channel acquisition signal are provided. According to the method for configuring a channel acquisition signal, a first communication node generates a configuration parameter for the channel acquisition signal, and sends the configuration parameter for the channel acquisition signal to a second communication node. The method may avoid the problems of overhead and pollution of the channel acquisition signals in a Large Scale Antenna System (LSAS).

## Description

### Technical Field

The present disclosure relates to the communication field, in particular to methods and devices for configuring or generating a channel acquisition signal.

### Background

The emergence of intelligent terminals, such as smartphones and tablet computers, causes vigorous development of data application services in a wireless communication network, such as cloud computing, Internet of Things, mobile Internet, video call through a mobile phone, online game, online video, online music, picture download, microblog, or online community. The emergence of intelligent terminals also causes massive increase of wireless communication network users and explosive increase of wireless data services. According to forecast of the authority, in the next 10 years, the wireless data services are expected to be increased by 500-1000 times, namely 1.6-2 times each year, which raises a very high requirement for the capacity of a wireless communication system.

There are many methods for increasing the wireless network capacity. Some commonly used methods include: (1) expanding spectral bandwidth; (2) strengthening service shunt; (3) increasing network density; and (4) improving spectral efficiency. In these methods, the method of improving spectral efficiency based on a multi-antenna technology attracts much attention.

A multi-antenna technology is evolved from Single User Multiple-Input Multiple-Output (SU-MIMO) to Multi-User Multiple-Input Multiple-Output (MU-MIMO), and is further developed into a Coordinated Multiple Points (CoMP) technology. The direction of development transfers from improving the stability and peak flow of a single link to improving the overall system flow. However, in realization of the CoMP technology, because of various difficulties (e.g. the resource overhead on measurement channel and data interaction, and the imbalance of multipath power), the performance the CoMP technology is unsatisfactory, and the expected effect is very difficult to be achieved.

Under this background, a communication technology based on a Large Scale Antenna System (LSAS) or massive MIMO is proposed to serve as the expansion and extension of the MIMO technology. The essential characteristic of the communication technology based on LSAS or massive MIMO is the configuration of a large number of antenna arrays (e.g., dozens to thousands) at a base station side, which serve multiple users at the same time by utilizing a Space Division Multiple Access (SDMA) principle. Because of huge array gain and interference suppression gain brought by the LSAS, both the overall spectral efficiency of a cell and the spectral efficiency of edge users are greatly improved.

The biggest problem for the implementation of LSAS in practical application is the problem of overhead and pollution of channel acquisition signals. By taking a Time Division Duplex (TDD) system for example, because of the reciprocity between uplink and downlink channels, the channel acquisition signal is generally sent by the terminal. Because there is a huge amount of terminals in the fifth generation mobile communication system, a serious interference may be caused among the channel acquisition signals sent by different terminals. In order to solve the problem, the simplest way is that different terminals use orthogonal resources to send the channel acquisition signals. However, a new problem arises with the adoption of this way, that is, the channel acquisition signal occupies a lot of uplink resources, which causes the overall system throughput to drop sharply. In a Frequency Division Duplex (FDD) system or a TDD system (e.g. a system working in a specific high frequency band) where no reciprocity exists between the uplink and downlink channels, because there is no reciprocity between the uplink and downlink channels, the overhead of downlink channel acquisition signals is proportional to the number of antennas. Moreover, the terminal needs to feed downlink channel state information back to the base station, which also brings a relatively high feedback overhead, and therefore degrades the performance of the LSAS greatly. Moreover, considering a factor that the antenna in future may have various forms according to the actual needs of environment, the problem of overhead and pollution of the channel acquisition signals of such type of antenna array may also need to be considered.

Aiming at the problem in related technology of overhead and pollution of the channel acquisition signals in the LSAS, an effective solution has not been proposed.

### Summary

Some embodiments of the present disclosure provide methods and devices for configuring or generating a channel acquisition signal, for at least solving the problem in related technology of overhead and pollution of the channel acquisition signals in an LSAS.

According to an exemplary embodiment of the present disclosure, a method for configuring a channel acquisition signal is provided, which may include that: a first communication node generates a configuration parameter for a channel acquisition signal, and sends the configuration parameter for the channel acquisition signal to a second communication node.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the first communication node may be a terminal, and the second communication node may be a base station. The configuration parameter for the channel acquisition signal may include: a configuration parameter for an uplink channel acquisition signal or a configuration parameter for a downlink channel acquisition signal.

In an exemplary embodiment of the present disclosure, when the configuration parameter for the channel acquisition signal is the configuration parameter for the uplink channel acquisition signal, port description information in the configuration parameter for the uplink channel acquisition signal may be port description information of the terminal; and/or, when the configuration parameter for the channel acquisition signal is the configuration parameter for the downlink channel acquisition signal, port description information in the configuration parameter for the downlink channel acquisition signal may be port description information of the base station.

In an exemplary embodiment of the present disclosure, the first communication node may be a terminal, and the second communication node may be a base station. Before the first communication node generates the configuration parameter for the channel acquisition signal, the first communication node may receive a downlink channel acquisition signal sent by the second communication node. The act that the first communication node generates the configuration parameter for the channel acquisition signal may include that: the first communication node generates the configuration parameter for the channel acquisition signal according to the downlink channel acquisition signal.

In an exemplary embodiment of the present disclosure, the act that the first communication node generates the configuration parameter for the channel acquisition signal according to the downlink channel acquisition signal may include the following acts. The first communication node acquires channel information from the downlink channel acquisition signal. The first communication node analyzes the channel information based on a compressive sensing technology, and generates the configuration parameter for the channel acquisition signal.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: Constant Amplitude Zero Auto Correlation (CAZAC) sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of ports of a communication node corresponding to the port description information.

In an exemplary embodiment of the present disclosure, the first communication node may be a base station, and the second communication node may be a terminal; or the first communication may be a terminal, and the second communication node may be a base station.

In an exemplary embodiment of the present disclosure, when the first communication node is the base station and the second communication node is the terminal, period information in the configuration parameter for the channel acquisition signal may be less than a period of the channel acquisition signal.

In an exemplary embodiment of the present disclosure, when the first communication node is the base station and the second communication node is the terminal, density information in the configuration parameter for the channel acquisition signal may be less than a density of the channel acquisition signal.

In an exemplary embodiment of the present disclosure, the configuration parameter for the channel acquisition signal may be based on a part of ports of the first communication node or the second communication node.

According to another embodiment of the present disclosure, a method for generating a channel acquisition signal is provided, which may include the following acts. A first communication node receives a configuration parameter, which is sent by the second communication node, for a channel acquisition signal. The first communication node generates the channel acquisition signal.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the first communication node may include: description information of at least a part of all antenna ports of the first communication node.

In an exemplary embodiment of the present disclosure, the configuration parameter for the channel acquisition signal may be based on a part of ports of the first communication node.

According to another embodiment of the present disclosure, a method for generating a channel acquisition signal is provided, which may include the following acts. A first communication node generates a channel acquisition signal according to a parameter including at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, before the first communication node generates the channel acquisition signal according to the parameter, the first communication node may receive the parameter sent by the second communication node; or the first communication node may generate the parameter.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of antenna ports of a communication node corresponding to the port description information.

According to another embodiment of the present disclosure, a device for configuring a channel acquisition signal is provided, which may include a generating module and a sending module. The generating module is configured to generate the configuration parameter for the channel acquisition signal at the first communication node. The sending module is configured to send the configuration parameter for the channel acquisition signal to the second communication node.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the first communication node may be a terminal, and the second communication node may be a base station. The configuration parameter for the channel acquisition signal may include: a configuration parameter for an uplink channel acquisition signal or a configuration parameter for a downlink channel acquisition signal.

In an exemplary embodiment of the present disclosure, when the configuration parameter for the channel acquisition signal is the configuration parameter for the uplink channel acquisition signal, port description information in the configuration parameter for the uplink channel acquisition signal may be port description information of the terminal; and/or, when the configuration parameter for the channel acquisition signal is the configuration parameter for the downlink channel acquisition signal, port description information in the configuration parameter for the downlink channel acquisition signal may be port description information of the base station.

In an exemplary embodiment of the present disclosure, the first communication node may be a terminal, and the second communication node may be a base station. The device may further include a receiving module. The receiving module is configured to, before the generating module generates the configuration parameter for the channel acquisition signal, receive at the first communication node the downlink channel acquisition signal sent by the second communication node. The generating module may be configured to generate at the first communication node the configuration parameter for the channel acquisition signal according to the downlink channel acquisition signal.

In an exemplary embodiment of the present disclosure, the generating module may include an acquiring unit and a generating unit. The acquiring unit is configured to acquire channel information from the downlink channel acquisition signal. The generating unit is configured to analyze the channel information through a compressive sensing technology, and generate the configuration parameter for the channel acquisition signal.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of ports of a communication node corresponding to the port description information.

In an exemplary embodiment of the present disclosure, the first communication node may be a base station, and the second communication node may be a terminal; or the first communication may be a terminal, and the second communication node may be a base station.

According to another embodiment of the present disclosure, a device for generating a channel acquisition signal is provided, which may include a receiving module and a generating module. The receiving module is configured to receive at a first communication node a configuration parameter, which is sent by a second communication node, for a channel acquisition signal. The generating module is configured to generate the channel acquisition signal.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, and pseudorandom sequence.

In an exemplary embodiment of the present disclosure, the port description information of the first communication node may include: description information of at least a part of all antenna ports of the first communication node.

In an exemplary embodiment of the present disclosure, the configuration parameter for the channel acquisition signal may be based on a part of ports of the first communication node.

According to another embodiment of the present disclosure, a device for generating a channel acquisition signal is provided, which may include a generating module. The generating module is configured to generate at a first communication node a channel acquisition signal according to a parameter including at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the device may further include a receiving module. The receiving module is configured to receive at the first communication node the parameter sent by the second communication node. Alternatively, the generating module may be further configured to generate the parameter at the first communication node.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of antenna ports of a communication node corresponding to the port description information.

Through some exemplary embodiments of the present disclosure, a first communication node generates a configuration parameter for a channel acquisition signal, and sends the configuration parameter for the channel acquisition signal to a second communication node, thus avoiding the problems of overhead and pollution of the channel acquisition signals in the LSAS.

### Brief Description of the Drawings

The accompanying drawings described here are used for providing a deeper understanding of the present disclosure, and constitute a part of the application; schematic embodiments of the present disclosure and description thereof are used for illustrating the present disclosure and not intended to form a limit to the present disclosure. In the accompanying drawings:
Fig. 1 is a flowchart of a method for configuring a channel acquisition signal according to an exemplary embodiment of the present disclosure;
Fig. 2 is a flowchart of an optional method for configuring a channel acquisition signal according to an exemplary embodiment of the present disclosure;
Fig. 3 is another flowchart of an optional method for configuring a channel acquisition signal according to an exemplary embodiment of the present disclosure;
Fig. 4 is another flowchart of an optional method for configuring a channel acquisition signal according to an exemplary embodiment of the present disclosure;
Fig. 5 is a structure diagram of a device for configuring a channel acquisition signal according to an exemplary embodiment of the present disclosure;
Fig. 6 is a structure diagram of an optional device for configuring a channel acquisition signal according to an exemplary embodiment of the present disclosure;
Fig. 7 is a structure diagram of an optional generating module according to an exemplary embodiment of the present disclosure;
Fig. 8 is a flowchart of a method for generating a channel acquisition signal according to an exemplary embodiment of the present disclosure;
Fig. 9 is a structure diagram of a device for generating a channel acquisition signal according to an exemplary embodiment of the present disclosure;
Fig. 10 is a flowchart of another method for generating a channel acquisition signal according to an exemplary embodiment of the present disclosure;
Fig. 11 is a structure diagram of another device for generating a channel acquisition signal according to an exemplary embodiment of the present disclosure;
Fig. 12 is a structure diagram of another optional device for generating a channel acquisition signal according to an exemplary embodiment of the present disclosure;
Fig. 13 is a flowchart of a method for configuring a channel acquisition signal according to a first exemplary embodiment of the present disclosure;
Fig. 14 is a flowchart of a method for configuring a channel acquisition signal according to a second exemplary embodiment of the present disclosure;
Fig. 15 is a flowchart of a method for configuring a channel acquisition signal according to a third exemplary embodiment of the present disclosure;
Fig. 16 is a flowchart of a method for generating a channel acquisition signal according to a fourth exemplary embodiment of the present disclosure;
Fig. 17 is a flowchart of a method for configuring a channel acquisition signal according to a fifth exemplary embodiment of the present disclosure;
Fig. 18 is a schematic diagram of an antenna port according to an exemplary embodiment of the present disclosure;
Fig. 19 is a schematic diagram of a method for configuring a channel acquisition signal according to a thirteenth exemplary embodiment of the present disclosure;
Fig. 20 is a schematic diagram of a method for generating a channel acquisition signal according to a fourteenth exemplary embodiment of the present disclosure;
Fig. 21 is a schematic diagram of a method for generating a channel acquisition signal according to a twenty-second exemplary embodiment of the present disclosure;
Fig. 22 is a schematic diagram of a method for generating a channel acquisition signal according to a twenty-third exemplary embodiment of the present disclosure; and
Fig. 23 is a schematic diagram of a method for generating a channel acquisition signal according to a twenty-fourth exemplary embodiment of the present disclosure.

### Detailed Description of the Embodiments

The present disclosure is elaborated below with reference to the accompanying drawings and exemplary embodiments. Note that, the exemplary embodiments of the present disclosure and the characteristics in the exemplary embodiments can be combined under the condition of no conflicts.

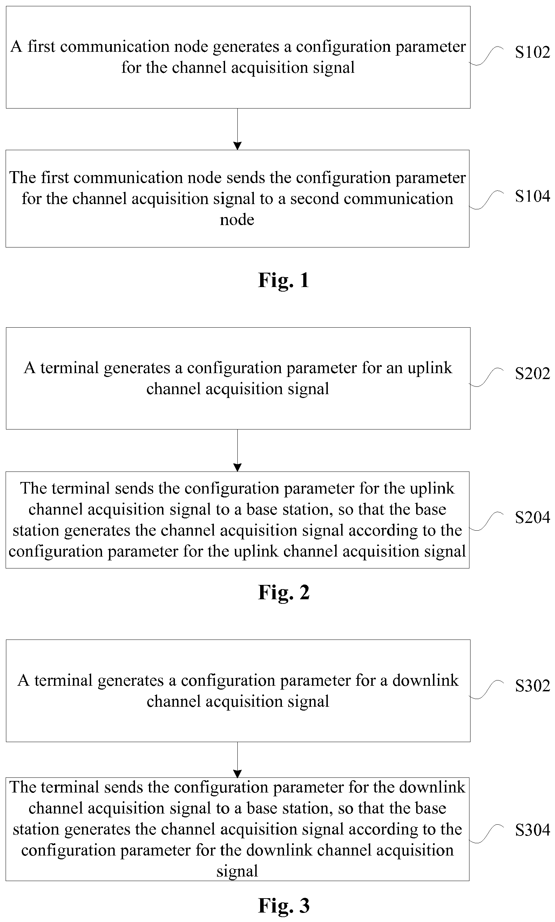

A method for configuring a channel acquisition signal is provided in an exemplary embodiment. Fig. 1 is a flowchart of a method for configuring a channel acquisition signal according to an exemplary embodiment of the present disclosure. As shown in Fig. 1, the flow may include the following acts.

At act S102, a first communication node generates a configuration parameter for the channel acquisition signal.

At act S104, the first communication node sends the configuration parameter for the channel acquisition signal to a second communication node.

Through the exemplary embodiment of the present disclosure, the first communication node generates the configuration parameter for the channel acquisition signal, and sends the configuration parameter for the channel acquisition signal to the second communication node, thus avoiding the problems of overhead and pollution of a channel acquisition signal in an LSAS.

In an exemplary embodiment, the second communication node may generate a channel acquisition signal according to the configuration parameter for the channel acquisition signal.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of ports of a communication node corresponding to the port description information.

In an exemplary embodiment of the present disclosure, the first communication node may be a base station, and the second communication node may be a terminal; or the first communication node may be a terminal, and the second communication node may be a base station.

In an exemplary embodiment of the present disclosure, when the first communication node is a base station and the second communication node is a terminal, period information in the configuration parameter for the channel acquisition signal may be less than a period of the channel acquisition signal.

In an exemplary embodiment of the present disclosure, when the first communication node is a base station and the second communication node is a terminal, density information in the configuration parameter for the channel acquisition signal may be less than a density of the channel acquisition signal.

In an exemplary embodiment of the present disclosure, the first communication node may be a terminal, and the second communication node may be a base station. The configuration parameter for the channel acquisition signal may include: a configuration parameter for an uplink channel acquisition signal or a configuration parameter for a downlink channel acquisition signal. Fig. 2 is a flowchart of an optional method for configuring a channel acquisition signal according to an exemplary embodiment of the present disclosure. As shown in Fig. 2, the flow may include the following acts.

At act S202, a terminal generates a configuration parameter for an uplink channel acquisition signal.

At act S204, the terminal sends the configuration parameter for the uplink channel acquisition signal to the base station, so that the base station generates the channel acquisition signal according to the configuration parameter for the uplink channel acquisition signal.

Fig. 3 is another flowchart of an optional method for configuring a channel acquisition signal according to an exemplary embodiment of the present disclosure. As shown in Fig. 3, the flow may include the following acts.

At act S302, a terminal generates a configuration parameter for a downlink channel acquisition signal.

At act S304, the terminal sends the configuration parameter for the downlink channel acquisition signal to the base station, so that the base station generates the channel acquisition signal according to the configuration parameter for the downlink channel acquisition signal.

In an exemplary embodiment of the present disclosure, when the configuration parameter for the channel acquisition signal is the configuration parameter for the uplink channel acquisition signal, port description information in the configuration parameter for the uplink channel acquisition signal may be port description information of the terminal; and/or, when the configuration parameter for the channel acquisition signal is the configuration parameter for the downlink channel acquisition signal, port description information in the configuration parameter for the downlink channel acquisition signal may be port description information of the base station.

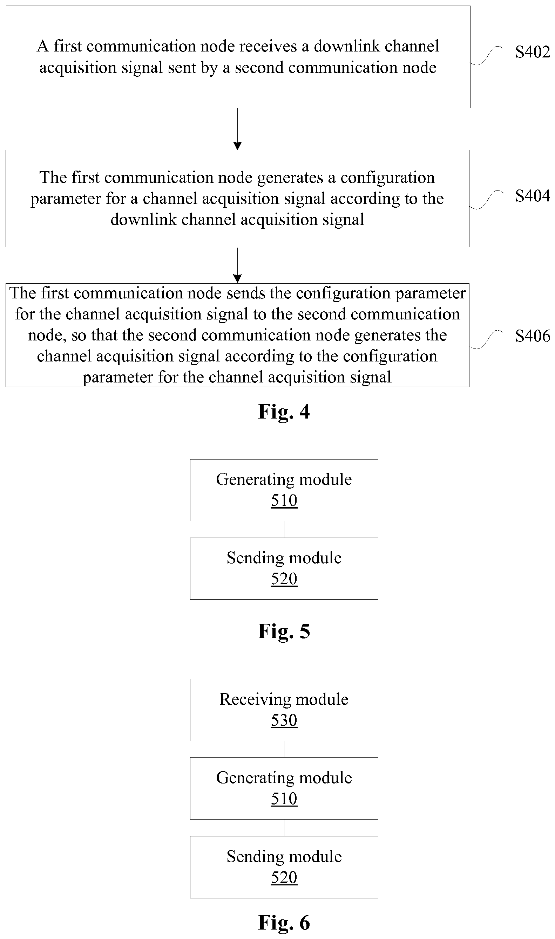

In an exemplary embodiment of the present disclosure, the first communication node may be a terminal, and the second communication node may be a base station. Before the first communication node generates the configuration parameter for the channel acquisition signal, the first communication node may receive a downlink channel acquisition signal sent by the second communication node. The act that the first communication node generates the configuration parameter for the channel acquisition signal may include the following act. The first communication node generates the configuration parameter for the channel acquisition signal according to the downlink channel acquisition signal. Fig. 4 is another flowchart of an optional method for configuring a channel acquisition signal according to an exemplary embodiment of the present disclosure. As shown in Fig. 4, the flow may include the following acts.

At act S402, a first communication node receives a downlink channel acquisition signal sent by a second communication node.

At act S404, the first communication node generates a configuration parameter for a channel acquisition signal according to the downlink channel acquisition signal.

At act S406, the first communication node sends the configuration parameter for the channel acquisition signal to the second communication node, so that the second communication node generates the channel acquisition signal according to the configuration parameter for the channel acquisition signal.

In an exemplary embodiment of the present disclosure, the act that the first communication node generates the configuration parameter for the channel acquisition signal according to the downlink channel acquisition signal may include the following acts. The first communication node acquires channel information from the downlink channel acquisition signal. The first communication node analyzes the channel information based on a compressive sensing technology, and generates the configuration parameter for the channel acquisition signal.

A device for configuring a channel acquisition signal is provided in an exemplary embodiment, which is used for implementing the above embodiments and exemplary embodiments. The embodiments which have been elaborated will not be repeated herein. The term "module" used below can realize a combination of software and/or hardware with an intended function. Although the device described in the following embodiment is realized through software better, the realization through hardware or a combination of software and hardware is possible and conceivable.

Fig. 5 is a structure diagram of a device for configuring a channel acquisition signal according to an exemplary embodiment of the present disclosure. As shown in Fig. 5, the device may include a generating module 510 and a sending module 520.

The generating module 510 is configured to generate the configuration parameter for the channel acquisition signal at the first communication node.

The sending module 520 is coupled with the generating module 510, and is configured to send the configuration parameter for the channel acquisition signal to the second communication node.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of ports of a communication node corresponding to the port description information.

In an exemplary embodiment of the present disclosure, the first communication node may be a base station, and the second communication node may be a terminal; or the first communication may be a terminal, and the second communication node may be a base station.

In an exemplary embodiment of the present disclosure, the first communication node may be a terminal, and the second communication node may be a base station. The configuration parameter for the channel acquisition signal may include: a configuration parameter for an uplink channel acquisition signal or a configuration parameter for a downlink channel acquisition signal.

In an exemplary embodiment of the present disclosure, when the configuration parameter for the channel acquisition signal is the configuration parameter for the uplink channel acquisition signal, port description information in the configuration parameter for the uplink channel acquisition signal may be port description information of the terminal; and/or, when the configuration parameter for the channel acquisition signal is the configuration parameter for the downlink channel acquisition signal, port description information in the configuration parameter for the downlink channel acquisition signal may be port description information of the base station. The generating module 510 may be configured to generate the configuration parameter for the uplink channel acquisition signal or the configuration parameter for the downlink channel acquisition signal.

In an exemplary embodiment of the present disclosure, the first communication node may be a terminal, and the second communication node may be a base station. Fig. 6 is a structure diagram of an optional device for configuring a channel acquisition signal according to an exemplary embodiment of the present disclosure. As shown in Fig. 6, the device may further include a receiving module 530. The receiving module 530 is configured to, before the generating module generates the configuration parameter for the channel acquisition signal, receive at the first communication node the downlink channel acquisition signal sent by the second communication node. The generating module 510 is coupled with the receiving module 530, and is configured to generate at the first communication node the configuration parameter for the channel acquisition signal according to the downlink channel acquisition signal.

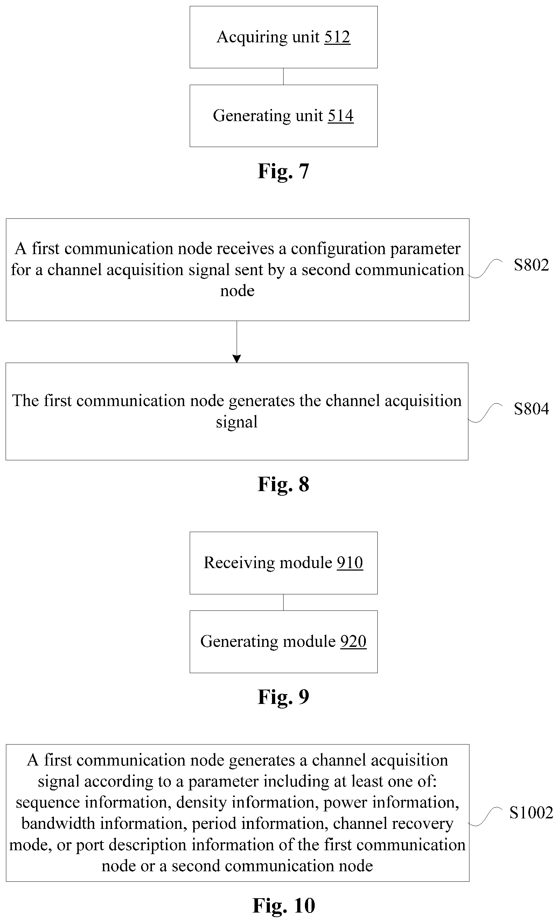

In an exemplary embodiment of the present disclosure, as shown in Fig. 7, the generating module 510 may include an acquiring unit 512 and a generating unit 514. The acquiring unit 512 is configured to acquire the channel information from the downlink channel acquisition signal. The generating unit 514 is coupled with the acquiring unit 512, and is configured to analyze the channel information through a compressive sensing technology, and generate the configuration parameter for the channel acquisition signal.

A method for generating a channel acquisition signal is provided in an exemplary embodiment. Fig. 8 is a flowchart of a method for generating a channel acquisition signal according to an exemplary embodiment of the present disclosure. As shown in Fig. 8, the flow may include the following acts.

At act S802, a first communication node receives a configuration parameter, which is sent by a second communication node, for a channel acquisition signal.

At act S804, the first communication node generates the channel acquisition signal.

Through the exemplary embodiment of the present disclosure, the first communication node receives the configuration parameter, which is sent by the second communication node, for the channel acquisition signal, and generates the channel acquisition signal, thus avoiding the problems of overhead and pollution of the channel acquisition signals in the LSAS.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information of the first communication node may include: description information of at least a part of all antenna ports of the first communication node.

In an exemplary embodiment of the present disclosure, the configuration parameter for the channel acquisition signal may be based on a part of ports of the first communication node.

In an exemplary embodiment of the present disclosure, the first communication node may be a terminal, and the second communication node may be a base station; or, the first communication node may be a base station, and the second communication node may be a terminal.

In an exemplary embodiment of the present disclosure, the configuration parameter for the channel acquisition signal may include: a configuration parameter for an uplink channel acquisition signal or a configuration parameter for a downlink channel acquisition signal.

A device for generating a channel acquisition signal is provided in an exemplary embodiment, which is used for implementing the above embodiments and exemplary embodiments. The embodiments which have been elaborated will not be repeated herein. The term "module" used below can realize a combination of software and/or hardware with an intended function. Although the device described in the following embodiment is realized through software better, the realization through hardware or a combination of software and hardware is possible and conceivable.

Fig. 9 is a structure diagram of a device for generating a channel acquisition signal according to an exemplary embodiment of the present disclosure. As shown in Fig. 9, the device may include a receiving module 910 and a generating module 920.

The receiving module 910 is configured to receive at the first communication node the configuration parameter, which is sent by the second communication node, for the channel acquisition signal.

The generating module 920 is coupled with the receiving module 910, and is configured to generate the channel acquisition signal.

In an exemplary embodiment of the present disclosure, the configuration parameter for the channel acquisition signal may include at least one of: sequence information, density information, power information, bandwidth information, period information, channel recovery mode, or port description information of the first communication node or the second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information of the first communication node may include: description information of at least a part of all antenna ports of the first communication node.

In an exemplary embodiment of the present disclosure, the configuration parameter for the channel acquisition signal may be based on a part of ports of the first communication node.

In an exemplary embodiment of the present disclosure, the first communication node may be a terminal, and the second communication node may be a base station; or the first communication may be a base station, and the second communication node may be a terminal.

In an exemplary embodiment of the present disclosure, the configuration parameter for the channel acquisition signal may include: a configuration parameter for an uplink channel acquisition signal or a configuration parameter for a downlink channel acquisition signal.

Another method for generating a channel acquisition signal is provided in an exemplary embodiment. Fig. 10 is a flowchart of another method for generating a channel acquisition signal according to an exemplary embodiment of the present disclosure. As shown in Fig. 10, the flow may include the following act.

At act S1002, a first communication node generates a channel acquisition signal according to a parameter including at least one of: sequence information, density information, power information, bandwidth information, period information, channel recovery mode, or port description information of the first communication node or a second communication node.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of antenna ports of a communication node corresponding to the port description information.

In an exemplary embodiment of the present disclosure, before the first communication node generates the channel acquisition signal according to at least one of the above parameters, the first communication node may receive the parameter sent by the second communication node; or the first communication node generates the parameter.

Another device for generating a channel acquisition signal is provided in an exemplary embodiment, which is used for implementing the above embodiments and exemplary embodiments. The embodiments which have been elaborated will not be repeated herein. The term "module" used below can realize a combination of software and/or hardware with an intended function. Although the device described in the following embodiment is realized through software better, the realization through hardware or a combination of software and hardware is possible and conceivable.

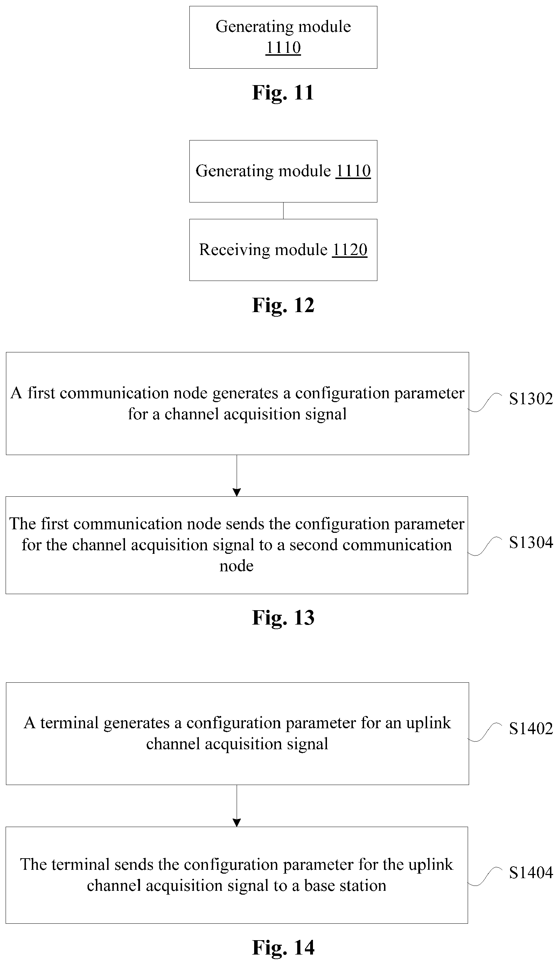

Fig. 11 is a structure diagram of another device for generating a channel acquisition signal according to an exemplary embodiment of the present disclosure. As shown in Fig. 11, the device may include a generating module 1110.

The generating module 1110 is configured to generate at a first communication node a channel acquisition signal according to a parameter including at least one of: sequence information, density information, power information, bandwidth information, period information, channel recovery mode, or port description information of the first communication node or the second communication node.

Through the exemplary embodiment of the present disclosure, generating the channel acquisition signal according to at least one of the above parameters may avoid the problems of overhead and pollution of the channel acquisition signals in the LSAS to some extent.

In an exemplary embodiment of the present disclosure, the density information may include at least one of: time-frequency density, frequency domain density, or antenna port domain density.

In an exemplary embodiment of the present disclosure, a sequence indicated by the sequence information may include at least one of: CAZAC sequence, walsh sequence, m sequence, or pseudorandom sequence.

In an exemplary embodiment of the present disclosure, the port description information of the second communication node may include: description information of at least a part of all antenna ports of the second communication node; or, the port description information of the first communication node may include: description information of at least a part of all antenna ports of the first communication node.

In an exemplary embodiment of the present disclosure, the port description information may be based on a part of ports of a communication node corresponding to the port description information.

In an exemplary embodiment of the present disclosure, as shown in Fig. 12, the device may further include a receiving module 1120. The receiving module 1120 is configured to receive at the first communication node the parameter sent by the second communication node. Alternatively, the generating module 1110 may be further configured to generate the parameter at the first communication node.

Some detailed exemplary embodiments of the present disclosure are described below.

### First exemplary embodiment

Fig. 13 is a flowchart of a method for configuring a channel acquisition signal according to a first exemplary embodiment of the present disclosure. As shown in Fig. 13, the flow may include the following acts.

At act S1302, a first communication node generates a configuration parameter for a channel acquisition signal.

At act S1304, the first communication node sends the configuration parameter for the channel acquisition signal to a second communication node.

The configuration parameter for the channel acquisition signal may include at least one of: sequence information, density information, power information, bandwidth information, period information, channel recovery mode, or port description information of the first communication node or the second communication node.

In an exemplary embodiment, the first communication node may be a terminal, and the second communication node may be a base station; or, the first communication node may be a base station, and the second communication node may be a terminal. That is, the configuration parameter for the channel acquisition signal may be sent from the base station to the terminal, or from the terminal to the base station.

In an exemplary embodiment, the density information may include at least one of: time-frequency density, frequency domain density, or antenna port domain density.

In an exemplary embodiment, a sequence indicated by the sequence information may include at least one of: CAZAC sequence, walsh sequence, m sequence, or pseudorandom sequence.

In an exemplary embodiment, before generating the configuration parameter for the channel acquisition signal, the first communication node may receive the downlink channel acquisition signal sent by the second communication node.

In an exemplary embodiment, the first communication node generates, through a compressive sensing technology, the configuration parameter for the channel acquisition signal according to the received downlink channel acquisition signal sent by the second communication node.

In an exemplary embodiment, the port description information of the second communication node may be description information, made by the first communication node, of a part of all antenna ports corresponding to the downlink channel acquisition signal sent by the second communication node.

In an exemplary embodiment, the configuration parameter for the channel acquisition signal may be based on a part of antenna ports.

### Second exemplary embodiment

Fig. 14 is a flowchart of a method for configuring a channel acquisition signal according to a second exemplary embodiment of the present disclosure. As shown in Fig. 14, the flow may include the following acts.

At act S1402, a terminal generates a configuration parameter for an uplink channel acquisition signal.

At act S1404, the terminal sends the configuration parameter for the uplink channel acquisition signal to a base station.

The configuration parameter for the uplink channel acquisition signal may include at least one of: sequence information, density information, power information, bandwidth information, period information, channel recovery mode, or port description information of the base station.

In an exemplary embodiment, the density information may include at least one of: time-frequency density, frequency domain density, or antenna port domain density.

In an exemplary embodiment, a sequence indicated by the sequence information may include at least one of: CAZAC sequence, walsh sequence, m sequence, or pseudorandom sequence.

In an exemplary embodiment, before generating the configuration parameter for the uplink channel acquisition signal, the terminal may receive the downlink channel acquisition signal sent by the base station.

In an exemplary embodiment, the terminal generates, through a compressive sensing technology, the configuration parameter for the uplink channel acquisition signal according to the received downlink channel acquisition signal sent by the base station.

In an exemplary embodiment, the port description information of the base station describes identification information of a part of ports.

### Third exemplary embodiment

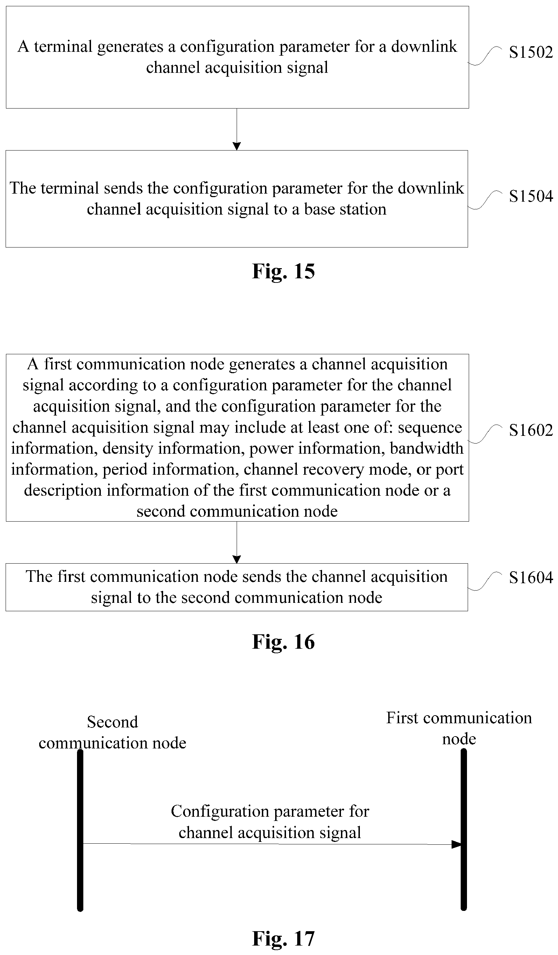

Fig. 15 is a flowchart of a method for configuring a channel acquisition signal according to a third exemplary embodiment of the present disclosure. As shown in Fig. 15, the flow may include the following acts.

At act S1502, a terminal generates a configuration parameter for a downlink channel acquisition signal.

At act S1504, the terminal sends the configuration parameter for the downlink channel acquisition signal to a base station.

The configuration parameter for the downlink channel acquisition signal may include at least one of: sequence information, density information, power information, bandwidth information, period information, channel recovery mode, or port description information of the terminal.

In an exemplary embodiment, the density information may include at least one of: time-frequency density, frequency domain density, or antenna port domain density.

In an exemplary embodiment, a sequence indicated by the sequence information may include at least one of: CAZAC sequence, walsh sequence, m sequence, or pseudorandom sequence.

In an exemplary embodiment, before generating the configuration parameter for the downlink channel acquisition signal, the terminal may receive the downlink channel acquisition signal sent by the base station.

In an exemplary embodiment, the terminal generates, through a compressive sensing technology, the configuration parameter for the downlink channel acquisition signal according to the received downlink channel acquisition signal sent by the base station.

In an exemplary embodiment, the port description information of the terminal describes the identification information of a part of ports.

### Fourth exemplary embodiment

Fig. 16 is a flowchart of a method for generating a channel acquisition signal according to a fourth exemplary embodiment of the present disclosure. As shown in Fig. 16, the flow may include the following acts.

At act S1602, a first communication node generates a channel acquisition signal according to a configuration parameter for the channel acquisition signal. The configuration parameter for the channel acquisition signal may include at least one of: sequence information, density information, power information, bandwidth information, period information, channel recovery mode, or port description information of the first communication node or a second communication node.

At act S1604, the first communication node sends the channel acquisition signal to the second communication node.

In an exemplary embodiment, the density information may include at least one of: time-frequency density, frequency domain density, or antenna port domain density.

In an exemplary embodiment, a sequence indicated by the sequence information may include at least one of: CAZAC sequence, walsh sequence, m sequence, or pseudorandom sequence.

In an exemplary embodiment, the first communication node may generate the configuration parameter for the channel acquisition signal.

In an exemplary embodiment, before S1602, the method may further include the following acts. The second communication node generates the configuration parameter for the channel acquisition signal, and sends the configuration parameter for the channel acquisition signal to the first communication node. The second communication node generates, through a compressive sensing technology, the configuration parameter for the channel acquisition signal according to the received downlink channel acquisition signal sent by the first communication node.

In an exemplary embodiment, the density of the configuration parameter for the channel acquisition signal may be less than a density of the downlink channel acquisition signal.

In an exemplary embodiment, the period of the configuration parameter for the channel acquisition signal may be less than a period of the downlink channel acquisition signal.

In an exemplary embodiment, the port description information of the first communication node may be description information, made by the second communication node, of a part of all antenna ports corresponding to the downlink channel acquisition signal sent by the first communication node.

In an exemplary embodiment, the configuration parameter for the channel acquisition signal may be based on a part of antenna ports.

In an exemplary embodiment, the first communication node may be a terminal, and the second communication node may be a base station; or, the first communication node may be a base station, and the second communication node may be a terminal.

### Fifth exemplary embodiment

Fig. 17 is a flowchart of a method for configuring a channel acquisition signal according to a fifth exemplary embodiment of the present disclosure. As shown in Fig. 17, the flow may include the following acts.

At act S1, a second communication node generates a configuration parameter for a channel acquisition signal. The configuration parameter for the channel acquisition signal may at least include sequence information.

At act S2, the second communication node sends the configuration parameter for the channel acquisition signal to a first communication node.

In an exemplary embodiment, a sequence indicated by the sequence information may include at least one of: CAZAC sequence, walsh sequence, m sequence, or pseudorandom sequence. The selection of the sequence may be determined by the second communication node according to an actual channel between the second communication node and the first communication node.

### Sixth exemplary embodiment

As shown in Fig. 17, the flow may include the following acts.

At act S1, a second communication node generates a configuration parameter for a channel acquisition signal. The configuration parameter for the channel acquisition signal may at least include density information.

At act S2, the second communication node sends the configuration parameter for the channel acquisition signal to a first communication node.

In an exemplary embodiment, the density information may include at least one of: time-frequency density, frequency domain density, or antenna port domain density. By taking the antenna port domain density for example, if the total number of the antenna ports is 128, 16 antenna ports may be selected to send the channel acquisition signal. These ports may be selected randomly or determined in a way agreed by both parties. The channels of other ports may be obtained by a receiving party via processing the 16 channel acquisition signals. As a preferred implementation, the density of the channel acquisition signal may be less than that of the downlink channel acquisition signal, which is beneficial to saving the overhead of the channel acquisition signal in the LSAS.

### Seventh exemplary embodiment

As shown in Fig. 17, the flow may include the following acts.

At act S1, a second communication node generates a configuration parameter for a channel acquisition signal. The configuration parameter for the channel acquisition signal may at least include power information.

At act S2, the second communication node sends the configuration parameter for the channel acquisition signal to a first communication node.

In an exemplary embodiment, the power information may be determined by the second communication node based on a channel recovery condition. For example, if the channel recovery condition is bad, the power may be increased, and vice versa.

### Eighth exemplary embodiment

As shown in Fig. 17, the flow may include the following acts.

At act S1, a second communication node generates a configuration parameter for a channel acquisition signal. The configuration parameter for the channel acquisition signal may at least include bandwidth information.

At act S2, the second communication node sends the configuration parameter for the channel acquisition signal to a first communication node.

In an exemplary embodiment, the bandwidth information may be sets consisting of a group or multiple groups of subcarriers. The configuration parameter for the channel acquisition signal may be used for setting other parameters of the channel acquisition signal on these sets, for example, sequence, density, period, channel recovery mode and/or corresponding antenna port. This solution is beneficial to configuring the parameter of the channel acquisition signal according to the channel conditions of different frequency domain positions, so that the second communication node or the first communication node may recover the channel through the channel acquisition signal as well as possible.

### Ninth exemplary embodiment

As shown in Fig. 17, the flow may include the following acts.

At act S1, a second communication node generates a configuration parameter for a channel acquisition signal. The configuration parameter for the channel acquisition signal may at least include period information.

At act S2, the second communication node sends the configuration parameter for the channel acquisition signal to a first communication node.

In an exemplary embodiment, the period of the channel acquisition signal may be less than that of the downlink channel acquisition signal, which is beneficial to enabling the second communication node or the first communication node to acquire channel information through the channel acquisition signal in time, and improving the spectrum utilization of the LSAS.

### Tenth exemplary embodiment

As shown in Fig. 17, the flow may include the following acts.

At act S1, a second communication node generates a configuration parameter for a channel acquisition signal. The configuration parameter for the channel acquisition signal may at least include channel recovery mode.

The channel recovery mode may include information about the way in which the second communication node or the first communication node recovers the channel based on the channel acquisition signal. The channel recovery mode may be a minimum mean square error mode, or a compressive sensing mode, or an iteration mode, or a combination of multiple modes, which is beneficial to selecting the most effective channel recovery mode according to the actual channel condition, thus reducing the overhead of the channel acquisition signal, and improving the spectrum utilization of the LSAS.

At act S2, the second communication node sends the configuration parameter for the channel acquisition signal to a first communication node.

### Twelfth exemplary embodiment

As shown in Fig. 17, the flow may include the following acts.

At act S1, a second communication node generates a configuration parameter for a channel acquisition signal. The configuration parameter for the channel acquisition signal may at least include port description information of the first communication node.

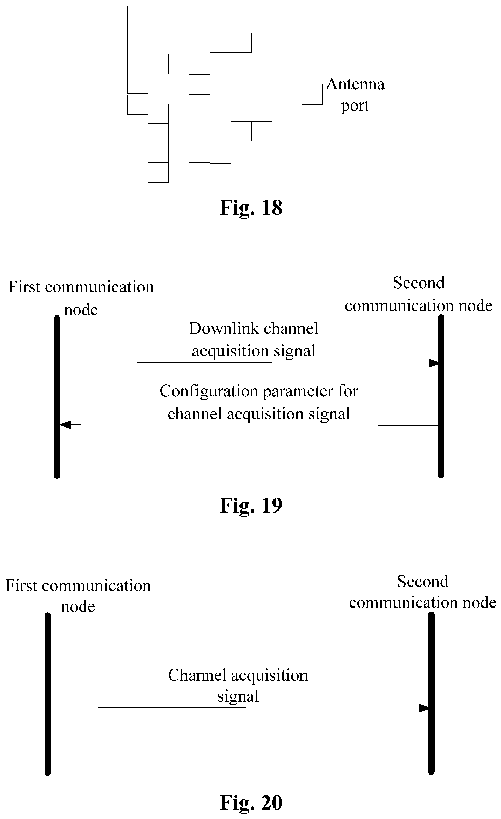

The port description information may be used for describing properties related to the downlink channel acquisition signal, such as identification information of the downlink channel acquisition signal, group information of the antenna port corresponding to the downlink channel acquisition signal made according to the channel, or information of a part of antenna ports corresponding to the downlink channel acquisition signal. By virtue of this solution, if all the antenna ports (e.g., 128 antenna ports) corresponding to the downlink channel acquisition signal form a special shape (e.g., as shown in Fig. 18) due to an actual environment, and the second communication node finds, after analyzing the channels of these antenna ports, that the channels corresponding to a part of antenna ports (e.g., 64 antenna ports) may be able to reduce the overhead of the corresponding channel acquisition signal, then the second communication node generates the configuration parameter for the channel acquisition signal based on the 64 antenna ports.

At act S2, the second communication node sends the configuration parameter for the channel acquisition signal to a first communication node.

### Thirteenth exemplary embodiment

In the exemplary embodiment, as shown in Fig. 19, a second communication node receives a downlink channel acquisition signal sent by a first communication node. The method may include the following acts.

At act S1, the second communication node generates a configuration parameter for a channel acquisition signal according to the received downlink channel acquisition signal.

In an exemplary embodiment, the second communication node analyzes, through a compressive sensing technology, the channel obtained based on the downlink channel acquisition signal, and determines the configuration parameter for the channel acquisition signal, for example, sequence information, density information, power information, bandwidth information, period information, channel recovery mode, or port description information of the first communication node. Generally, the overhead of the downlink channel acquisition signal is relatively high, so the second communication node can acquire comparatively accurate channel information based on the downlink channel acquisition signal. The second communication node may determine the configuration information of the channel acquisition signal by analyzing this channel information, and the overhead of the channel acquisition signal can be lower than that of the downlink channel acquisition signal.

At act S2, the second communication node sends the configuration parameter for the channel acquisition signal to the first communication node.

### Fourteenth exemplary embodiment

In the exemplary embodiment, as shown in Fig. 20, the method may include the following acts.

At act S1, a first communication node generates a channel acquisition signal according to a configuration parameter for the channel acquisition signal. The configuration parameter for the channel acquisition signal may at least include sequence information.

In an exemplary embodiment, a sequence indicated by the sequence information may be CAZAC sequence, or walsh sequence, or m sequence, or pseudorandom sequence. The sequence may be selected according to an actual channel between the second communication node and the first communication node.

At act S2, the first communication node sends the channel acquisition signal to a second communication node.

### Fifteenth exemplary embodiment

As shown in Fig. 20, the method may include the following acts.

At act S1, a first communication node generates a channel acquisition signal according to a configuration parameter for the channel acquisition signal. The configuration parameter for the channel acquisition signal may at least include density information.

In an exemplary embodiment, the density information may include at least one of: time-frequency density, frequency domain density, or antenna port domain density. By taking the antenna port domain density for example, if the total number of the antenna ports is 128, 16 antenna ports may be selected to send the channel acquisition signal. These 16 antenna ports may be selected randomly or determined in a way agreed by both parties. The channels of other ports may be obtained by the receiving party after processing the channel acquisition signals sent over the 16 antenna ports. As a recommended implementation, the density of the channel acquisition signal may be less than that of the downlink channel acquisition signal, which is beneficial to saving the overhead of the channel acquisition signal in the LSAS.

At act S2, the first communication node sends the channel acquisition signal to a second communication node.

### Sixteenth exemplary embodiment

As shown in Fig. 20, the method may include the following acts.

At act S1, a first communication node generates a channel acquisition signal according to a configuration parameter for the channel acquisition signal. The configuration parameter for the channel acquisition signal may at least include power information.

In an exemplary embodiment, the power information may be determined based on the channel recovery condition. For example, if the channel recovery condition is bad, the power is increased, and vice versa.

At act S2, the first communication node sends the channel acquisition signal to a second communication node.

### Seventeenth exemplary embodiment

As shown in Fig. 20, the method may include the following acts.

At act S1, a first communication node generates a channel acquisition signal according to a configuration parameter for the channel acquisition signal. The configuration parameter for the channel acquisition signal may at least include bandwidth information.

In an exemplary embodiment, the bandwidth information may be sets consisting of a group or multiple groups of subcarriers. The configuration parameter for the channel acquisition signal may be used for setting other parameters of the channel acquisition signal on these sets, for example, sequence, density, period, channel recovery mode or corresponding antenna port. This solution may be beneficial to configuring the parameter of the channel acquisition signal according to the channel conditions of different frequency domain positions, so that the second communication node recovers the channel through the channel acquisition signal as well as possible;

At act S2, the first communication node sends the channel acquisition signal to a second communication node.

### Eighteenth exemplary embodiment

As shown in Fig. 20, the method may include the following acts.

At act S1, a first communication node generates a channel acquisition signal according to a configuration parameter for the channel acquisition signal. The configuration parameter for the channel acquisition signal may at least include period information.

In an exemplary embodiment, the period of the channel acquisition signal may be less than that of the downlink channel acquisition signal, which is beneficial to enabling the second communication node to acquire channel information through the channel acquisition signal in time, and improving the spectrum utilization of the LSAS;

At act S2, the first communication node sends the channel acquisition signal to a second communication node.

### Nineteenth exemplary embodiment

As shown in Fig. 20, the method may include the following acts.

At act S1, a first communication node generates a channel acquisition signal according to a configuration parameter for the channel acquisition signal. The configuration parameter for the channel acquisition signal may at least include channel recovery mode.

The channel recovery mode may include information about the way in which the second communication node recovers the channel based on the channel acquisition signal. The channel recovery mode may be a minimum mean square error mode, or a compressive sensing mode, or an iteration mode, or a combination of multiple modes, which is beneficial to selecting the most effective channel recovery mode according to the actual channel condition, thus reducing the overhead of the channel acquisition signal, and improving the spectrum utilization of the LSAS.

At act S2, the first communication node sends the channel acquisition signal to a second communication node.

### Twentieth exemplary embodiment

As shown in Fig. 20, the method may include the following acts.

At act S1, a first communication node generates a channel acquisition signal according to a configuration parameter for the channel acquisition signal. The configuration parameter for the channel acquisition signal may at least include port description information of the first communication node.

In an exemplary embodiment, the port description information may be used for describing the properties related to the downlink channel acquisition signal, such as identification information of the downlink channel acquisition signal, group information of the antenna port corresponding to the downlink channel acquisition signal made according to the channel, or information of a part of antenna ports corresponding to the downlink channel acquisition signal. By virtue of this solution, if all the antenna ports (e.g., 128 antenna ports) corresponding to the downlink channel acquisition signal form a special shape due to an actual environment, and the second communication node finds, after analyzing the channels of these antenna ports, that the channels corresponding to a part of antenna ports (e.g., 64 antenna ports) may be able to reduce the overhead of the corresponding channel acquisition signal, then the second communication node generates the configuration parameter for the channel acquisition signal based on the 64 antenna ports.

At act S2, the first communication node sends the channel acquisition signal to a second communication node.

### Twenty-first exemplary embodiment

As shown in Fig. 20, the method may include the following acts.

At act S1, a first communication node generates a channel acquisition signal according to a configuration parameter for the channel acquisition signal. The configuration parameter for the channel acquisition signal may be sent to the first communication node by the second communication node (or other elements in the network), or may be generated by the first communication node itself. The configuration parameter for the channel acquisition signal may include at least one of: sequence information, density information, power information, bandwidth information, period information, channel recovery mode, or port description information of the first communication node.

At act S2, the first communication node sends the channel acquisition signal to a second communication node.

### Twenty-second exemplary embodiment

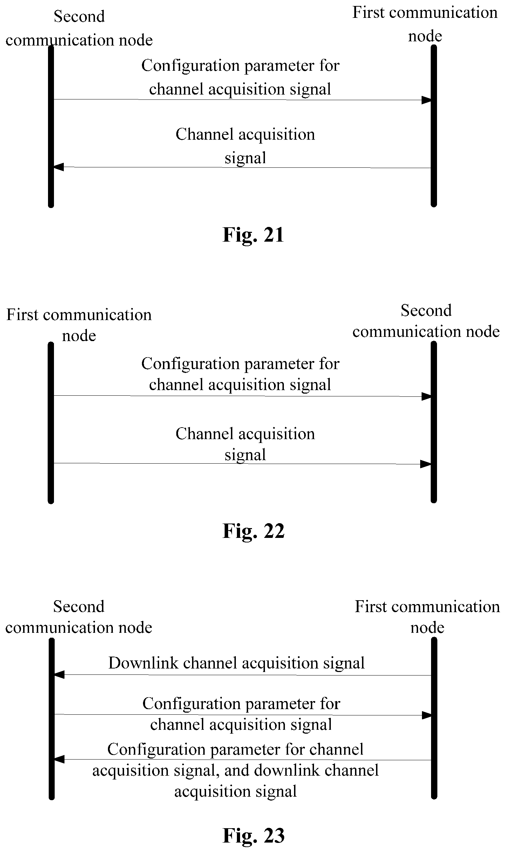

As shown in Fig. 21, the method may include the following acts.

At act S1, a second communication node generates a configuration parameter for a channel acquisition signal. The configuration parameter for the channel acquisition signal may include at least one of: sequence information, density information, power information, bandwidth information, period information, channel recovery mode, or port description information of the first communication node.

At act S2, the second communication node sends the configuration parameter for the channel acquisition signal to a first communication node.

At act S3, the first communication node generates the channel acquisition signal.

At act S4, the first communication node sends the channel acquisition signal.

At act S5, the second communication node receives the channel acquisition signal.

### Twenty-third exemplary embodiment

As shown in Fig. 22, the method may include the following acts.

At act S1, a first communication node generates a configuration parameter for a channel acquisition signal. The configuration parameter for the channel acquisition signal may include at least one of: sequence information, density information, power information, bandwidth information, period information, channel recovery mode, or port description information of the first communication node.

At act S2, the first communication node generates the channel acquisition signal based on the configuration parameter for the channel acquisition signal.

At act S3, the first communication node sends the configuration parameter for the channel acquisition signal and the channel acquisition signal to a second communication node.

At act S4, the second communication node receives the channel acquisition signal.

### Twenty-fourth exemplary embodiment

As shown in Fig. 23, the method may include the following acts.

At act S1, a first communication node sends a downlink channel acquisition signal.

At act S2, a second communication node generates a configuration parameter for a channel acquisition signal, and sends the configuration parameter to the first communication node. The configuration parameter for the channel acquisition signal may include at least one of: sequence information, density information, power information, bandwidth information, period information, channel recovery mode, or port description information of the first communication node.

At act S3, the first communication node generates the channel acquisition signal based on the configuration parameter for the channel acquisition signal.

At act S4, the first communication node sends the configuration parameter for the channel acquisition signal and the downlink channel acquisition signal to the second communication node.

At act S5, the second communication node receives the channel acquisition signal.

Obviously, those skilled in the art should appreciate that the above modules and acts of the present disclosure may be implemented by a general-purpose computing device. The above modules and acts may be centralized in a single computing device or distributed on a network composed of multiple computing devices. In some exemplary embodiments, the above modules and acts may be implemented by a program code which is capable of being executed by the computing device, so that they may be stored in a storage device and executed by the computing device. In some situations, the presented or described acts may be executed in an order different from that described here; or they may be made into integrated circuit modules, respectively; or multiple modules or acts of these modules or acts may be made into a single integrated circuit module. In this way, the present disclosure is not limited to any particular combination of hardware and software.

The above is only the exemplary embodiment of the present disclosure and not intended to limit the present disclosure. For those skilled in the art, the present disclosure may have various modifications and changes. Any modifications, equivalent replacements, improvements and the like within the principle of the present disclosure shall fall within the scope of protection defined by the appended claims of the present disclosure.

### Industrial Applicability

Through some embodiments of the present disclosure, a first communication node generates a configuration parameter for a channel acquisition signal, and sends the configuration parameter for the channel acquisition signal to a second communication node, thus avoiding the problems of overhead and pollution of the channel acquisition signals in the LSAS.

## Claims

1. A method for configuring a channel acquisition signal, comprising:
generating, by a first communication node, a configuration parameter for the channel acquisition signal; and
sending, by the first communication node, the configuration parameter for the channel acquisition signal to a second communication node.

2. The method as claimed in claim 1, wherein the configuration parameter for the channel acquisition signal comprises at least one of: sequence information, density information, power information, bandwidth information, period information, channel recovery mode, or port description information of the first communication node or the second communication node.

3. The method as claimed in claim 1 or 2, wherein the first communication node is a terminal, and the second communication node is a base station; the configuration parameter for the channel acquisition signal comprises: a configuration parameter for an uplink channel acquisition signal or a configuration parameter for a downlink channel acquisition signal.

4. The method as claimed in claim 3, wherein
when the configuration parameter for the channel acquisition signal is the configuration parameter for the uplink channel acquisition signal, port description information in the configuration parameter for the uplink channel acquisition signal is port description information of the terminal; and/or,
when the configuration parameter for the channel acquisition signal is the configuration parameter for the downlink channel acquisition signal, port description information in the configuration parameter for the downlink channel acquisition signal is port description information of the base station.

5. The method as claimed in claim 1 or 2, wherein the first communication node is a terminal, and the second communication node is a base station;
before generating, by the first communication node, the configuration parameter for the channel acquisition signal, the method further comprises: receiving, by the first communication node, a downlink channel acquisition signal sent by the second communication node;
generating, by the first communication node, the configuration parameter for the channel acquisition signal comprises: generating, by the first communication node, the configuration parameter for the channel acquisition signal according to the downlink channel acquisition signal.

6. The method as claimed in claim 5, wherein generating, by the first communication node, the configuration parameter for the channel acquisition signal according to the downlink channel acquisition signal comprises:
acquiring, by the first communication node, channel information from the downlink channel acquisition signal; and
analyzing, by the first communication node, the channel information based on a compressive sensing technology, and generating, by the first communication node, the configuration parameter for the channel acquisition signal.

7. The method as claimed in claim 2, wherein the density information comprises at least one of: time-frequency density, frequency domain density, or antenna port domain density.

8. The method as claimed in claim 2, wherein a sequence indicated by the sequence information comprises at least one of: Constant Amplitude Zero Auto Correlation, CAZAC, sequence, walsh sequence, m sequence, or pseudorandom sequence.

9. The method as claimed in claim 2, wherein the port description information of the second communication node comprises: description information of at least a part of all antenna ports of the second communication node; or, the port description information of the first communication node comprises: description information of at least a part of all antenna ports of the first communication node.

10. The method as claimed in claim 2, wherein the port description information is based on a part of ports of a communication node corresponding to the port description information.

11. The method as claimed in any one of claims 1, 2, 7 to 10, wherein the first communication node is a base station, and the second communication node is a terminal; or the first communication is a terminal, and the second communication node is a base station.

12. The method as claimed in claim 5 or 6, wherein when the first communication node is the base station and the second communication node is the terminal, period information in the configuration parameter for the channel acquisition signal is less than a period of the channel acquisition signal.

13. The method as claimed in claim 5 or 6, wherein when the first communication node is the base station and the second communication node is the terminal, density information in the configuration parameter for the channel acquisition signal is less than a density of the channel acquisition signal.

14. The method as claimed in claim 1, wherein the configuration parameter for the channel acquisition signal is based on a part of ports of the first communication node or the second communication node.

15. A method for generating a channel acquisition signal, comprising:
receiving, by a first communication node, a configuration parameter, which is sent by a second communication node, for the channel acquisition signal; and
generating, by the first communication node, the channel acquisition signal.

16. The method as claimed in claim 15, wherein the configuration parameter for the channel acquisition signal comprises at least one of: sequence information, density information, power information, bandwidth information, period information, channel recovery mode, or port description information of the first communication node or the second communication node.

17. The method as claimed in claim 16, wherein the density information comprises at least one of: time-frequency density, frequency domain density, or antenna port domain density.

18. The method as claimed in claim 16, wherein a sequence indicated by the sequence information comprises at least one of: Constant Amplitude Zero Auto Correlation, CAZAC, sequence, walsh sequence, m sequence, or pseudorandom sequence.

19. The method as claimed in claim 16, wherein the port description information of the first communication node comprises: description information of at least a part of all antenna ports of the first communication node.

20. The method as claimed in claim 19, wherein the configuration parameter for the channel acquisition signal is based on a part of ports of the first communication node.

21. A method for generating a channel acquisition signal, comprising:
generating, by a first communication node, a channel acquisition signal according to a parameter comprising at least one of: sequence information, density information, power information, bandwidth information, period information, channel recovery mode, or port description information of the first communication node or a second communication node.

22. The method as claimed in claim 21, wherein the density information comprises at least one of: time-frequency density, frequency domain density, or antenna port domain density.

23. The method as claimed in claim 21 or 22, wherein a sequence indicated by the sequence information comprises at least one of: Constant Amplitude Zero Auto Correlation, CAZAC, sequence, walsh sequence, m sequence, or pseudorandom sequence.

24. The method as claimed in claim 21, wherein before generating, by the first communication node, the channel acquisition signal according to the parameter, the method further comprises:
receiving, by the first communication node, the parameter sent by the second communication node; or
generating, by the first communication node, the parameter.

25. The method as claimed in claim 21, wherein the port description information of the second communication node comprises: description information of at least a part of all antenna ports of the second communication node; or, the port description information of the first communication node comprises: description information of at least a part of all antenna ports of the first communication node.

26. The method as claimed in claim 21, wherein the port description information is based on a part of antenna ports of a communication node corresponding to the port description information.

27. A device for configuring a channel acquisition signal, comprising:
a generating module, which is configured to generate a configuration parameter for the channel acquisition signal at a first communication node; and
a sending module, which is configured to send the configuration parameter for the channel acquisition signal to a second communication node.

28. The device as claimed in claim 27, wherein the configuration parameter for the channel acquisition signal comprises at least one of: sequence information, density information, power information, bandwidth information, period information, channel recovery mode, or port description information of the first communication node or the second communication node.

29. The device as claimed in claim 27 or 28, wherein the first communication node is a terminal, and the second communication node is a base station; the configuration parameter for the channel acquisition signal comprises: a configuration parameter for an uplink channel acquisition signal or a configuration parameter for a downlink channel acquisition signal.

30. The device as claimed in claim 29, wherein
when the configuration parameter for the channel acquisition signal is the configuration parameter for the uplink channel acquisition signal, port description information in the configuration parameter for the uplink channel acquisition signal is port description information of the terminal; and/or,
when the configuration parameter for the channel acquisition signal is the configuration parameter for the downlink channel acquisition signal, port description information in the configuration parameter for the downlink channel acquisition signal is port description information of the base station.

31. The device as claimed in claim 27 or 28, wherein the first communication node is a terminal, and the second communication node is a base station;
the device further comprises: a receiving module, which is configured to, before the generating module generates the configuration parameter for the channel acquisition signal, receive at the first communication node a downlink channel acquisition signal sent by the second communication node;
the generating module is configured to generate at the first communication node the configuration parameter for the channel acquisition signal according to the downlink channel acquisition signal.

32. The device as claimed in claim 31, wherein the generating module comprises:
an acquiring unit, which is configured to acquire channel information from the downlink channel acquisition signal; and
a generating unit, which is configured to analyze the channel information based on a compressive sensing technology, and generate the configuration parameter for the channel acquisition signal.

33. The device as claimed in claim 28, wherein the density information comprises at least one of: time-frequency density, frequency domain density, or antenna port domain density.

34. The device as claimed in claim 28, wherein a sequence indicated by the sequence information comprises at least one of: Constant Amplitude Zero Auto Correlation, CAZAC, sequence, walsh sequence, m sequence, or pseudorandom sequence.

35. The device as claimed in claim 28, wherein the port description information of the second communication node comprises: description information of at least a part of all antenna ports of the second communication node; or, the port description information of the first communication node comprises: description information of at least a part of all antenna ports of the first communication node.

36. The device as claimed in claim 28, wherein the port description information is based on a part of ports of a communication node corresponding to the port description information.

37. The device as claimed in any one of claims 27, 28, 33 to 36, wherein the first communication node is a base station, and the second communication node is a terminal; or the first communication is a terminal, and the second communication node is a base station.

38. A device for generating a channel acquisition signal, comprising:
a receiving module, which is arranged to receive at a first communication node a configuration parameter, which is sent by a second communication node, for the channel acquisition signal; and
a generating module, which is arranged to generate the channel acquisition signal.

39. The device as claimed in claim 38, wherein the configuration parameter for the channel acquisition signal comprises at least one of: sequence information, density information, power information, bandwidth information, period information, channel recovery mode, or port description information of the first communication node or the second communication node.

40. The device as claimed in claim 39, wherein the density information comprises at least one of: time-frequency density, frequency domain density, or antenna port domain density.

41. The device as claimed in claim 39, wherein a sequence indicated by the sequence information comprises at least one of: Constant Amplitude Zero Auto Correlation, CAZAC, sequence, walsh sequence, m sequence, or pseudorandom sequence.

42. The device as claimed in claim 39, wherein the port description information of the first communication node comprises: description information of at least a part of all antenna ports of the first communication node.

43. The device as claimed in claim 42, wherein the configuration parameter for the channel acquisition signal is based on a part of ports of the first communication node.

44. A device for generating a channel acquisition signal, comprising:
a generating module, which is arranged to generate at a first communication node a channel acquisition signal according to a parameter comprising at least one of: sequence information, density information, power information, bandwidth information, period information, channel recovery mode, or port description information of the first communication node or a second communication node.

45. The device as claimed in claim 44, wherein the density information comprises at least one of: time-frequency density, frequency domain density, or antenna port domain density.

46. The device as claimed in claim 44 or 45, wherein a sequence indicated by the sequence information comprises at least one of: Constant Amplitude Zero Auto Correlation, CAZAC, sequence, walsh sequence, m sequence, or pseudorandom sequence.

47. The device as claimed in claim 44, further comprising:
a receiving module, which is arranged to receive at the first communication node the parameter sent by the second communication node; or
the generating module is further arranged to generate the parameter at the first communication node.

48. The device as claimed in claim 44, wherein the port description information of the second communication node comprises: description information of at least a part of all antenna ports of the second communication node; or, the port description information of the first communication node comprises: description information of at least a part of all antenna ports of the first communication node.

49. The device as claimed in claim 44, wherein the port description information is based on a part of antenna ports of a communication node corresponding to the port description information.
